# EUROPEAN PATENT SPECIFICATION

(11) **EP 1 019 308 B1**
(45) Date of publication and mention of the grant of the patent: **16.01.2002**
(21) Application number: 98946266.8
(22) Date of filing: 30.09.1998
(51) Int. Cl.: B65G 19/20, B65G 19/22, B65G 19/14

(54) **CHAIN CONSISTING OF INTERLOCKING WIRE LINKS FOR A SCRAPER CONVEYOR**
KETTE MIT INEINANDER GREIFENDEN DRAHTGLIEDERN FÜR KRATZERFÖRDERER
CHAINE FORMEE DE MAILLONS DE CABLES RELIES POUR UN TRANSPORTEUR A RACLETTES

(30) Priority: 10.10.1997 DK 115997
(43) Date of publication of application: 19.07.2000
(73) Proprietor: A/S DANSK STALDINDUSTRI, 7400 Herning (DK)
(72) Inventor: FRYDKJ R, John, DK-7600 Struer (DK)
(74) Representative: Boesen, Johnny Peder
(86) International application number: DK9800421
(87) International publication number: WO9919239

(56) References cited:
- EP-A1- 0 005 498
- US-A- 2 012 831
- US-A- 3 822 779

## Description

The invention relates to a scraper conveyor, in particular a pipe conveyor for feeding systems and of the type which comprises a scraper chain provided with carriers where at least one connecting links which is essentially rod-shaped, is present between two chain links which are provided with a carrier.

Basically, two different feeding devices are used for feeding the feed in a pipe scraper conveyor in an automatic feeding system, viz. worms or scraper chains and scraper wires, respectively.

Scraper chains have been used for a long time in pipe conveyors. A widely used type of scraper chain is entirely of steel, and the individual chain links consist of circular carriers on whose rear side, seen with respect to the travelling direction of the chain, it is provided with a semi-circular eye. The front side has a very elongated eye with two almost parallel legs which are interconnected in a semicircle. The two eyes are arranged on their respective sides of the carrier with a perpendicular orientation relative to each other.

Another structure of scraper chains employs an ordinary chain having ring-shaped chain links, with a carrier arranged on every second chain link.

A variant of this type for chicken feeding is known from GB-A-2 216 483, where the chain links are constructed with an almost rectangular carrier and uniformly shaped eyes. The chain links are made of a plastics material, since these are to run in open troughs and not in closed pipes. From these open troughs, the animals eat the feed directly from the compartments between the carriers on the chain. This is thus a totally different type of carrier chain compared to the scraper chains which are used in pipe conveyors for the dispensing of feed in feed dispensers in a feeding system.

The scraper chains, however, have a drawback in the form of a relatively great weight, which means that they cannot be made very long, and they are therefore unsuitable for large houses. Furthermore, scraper chains may be very noisy compared to the wires.

Scraper wires are known from EP-A 0005 498 which obviates the drawbacks and deficiencies of the scraper chains. A scraper wire comprises a steel wire on which circular carrier discs of plastics are equidistantly moulded.

However, scraper wires wear relatively quickly and thus have a short service life. Moreover, they have the drawback that they constitute a veterinary problem after a short time in use. The sharp directional changes - generally of 90° - on the conveyor means that the individual strands of the wire open and that the feed penetrates between these. This causes the strands of the scraper wire to break and fragments to come off the wire. The broken strands of the wires drop down into the feed and are carried along to the feed dispensers. This may have negative consequences for the health of the animals which eat the feed with the wire fragments. It has moreover been found that these wire fragments stick to the tongue of the animals when they eat the feed, which is a great discomfort for the animals, just as it may cause parts of the animal, e.g. the tongue of a pig, to be unfit for human consumption.

This problem does not occur when using scraper chains. A further drawback of the scraper chain, however, is that feed may accumulate on top of the two legs of the chain links, as the feed forms a bridge across the gap. The immediate impression may be that only a modest amount is involved, but it should be taken into consideration here that with the modern feeding methods the feed must be dispensed to the pigs in very accurately metered amounts to obtain optimization of the growth. The bridge formation thus results in transport of feed which cannot be dispensed in the feed dispensers, which means that an unnecessary dead weight is transported in the pipe conveyor.

Accordingly, the object of the invention is to provide a scraper conveyor of the type mentioned in the opening paragraph which obviates the above-mentioned drawbacks of the known scraper chains.

The invention comprises a scraper conveyor in which at least one connecting link, which is essentially rod-shaped, is present between two chain links which are provided with a carrier, where the connecting link is made of a wire material which is bent at each end into an eye at which the connecting link is hooked together with its adjacent links.

A specially constructed scraper chain is used in a scraper conveyor according to the invention, whereby the problem of bridge formation is solved, just as a scraper chain is provided which has an extremely low weight and is thereby suitable also for large feeding systems, The connecting link is made of a wire material which is bent at each end into an eye at which the connecting link is hooked together with its adjacent chain links. This provides an extremely simple embodiment of the connecting link which is favourable in terms of weight.

In the preferred embodiment of a scraper conveyor according to the invention, the scraper chain is constructed such that there is precisely one connecting link between each carrier link. This is the most simple structure of the chain. If circumstances so permit, more connecting links may be inserted between the carrier links of course.

In the preferred embodiment, the carrier link exhibits a carrier disc which is moulded on a ring-shaped chain link so that the chain link is divided into two eyes, one on each side of the carrier disc for coupling with a connecting link of its own.

In a particularly simple embodiment, the ring-shaped chain Link is made by bending of a wire material whose ends are embedded in the moulded carrier disc. Expediently, at least one wire end is bent outwards from the link. This results in a simple structure of the carrier link, just as the carrier disc is held on the chain link, as the disc is moulded around the ends in the wire, and the bent end thus embedded will effectively prevent sliding of the disc on the chain link.

Another structure of the carrier links consists of two halves which are welded together, the weld being embedded in the carrier disc. The link is hereby protected against being opened, while the welded joint fixes the carrier disc when this is moulded thereon.

The invention moreover provides a scraper chain for use in a scraper conveyor according to the first aspect of the invention. In a third aspect, a feeding system, in particular for pigs,
comprising a scraper conveyor, in particular a pipe conveyor for feeding systems of the type which comprises a scraper chain provided with carriers where at least one connecting link, which is essentially rod-shaped, is present between two chain links which are provided with a carrier where the connecting link is made of a wire material which is bent at each end into an eye at which the connecting link is hooked together with its adjacent links.

The invention will be described more fully below with reference to the accompanying drawing, in which
- fig. 1: schematically shows a feeding system for pigs,
- fig. 2: shows a section of a scraper chain according to the invention,
- fig. 3: shows the same as fig. 2, but seen from another side,
- fig. 4: shows a section like in fig. 2 of another embodiment of the scraper chain according to the invention,
- fig. 5: shows the same as in fig. 4, but seen from another side.

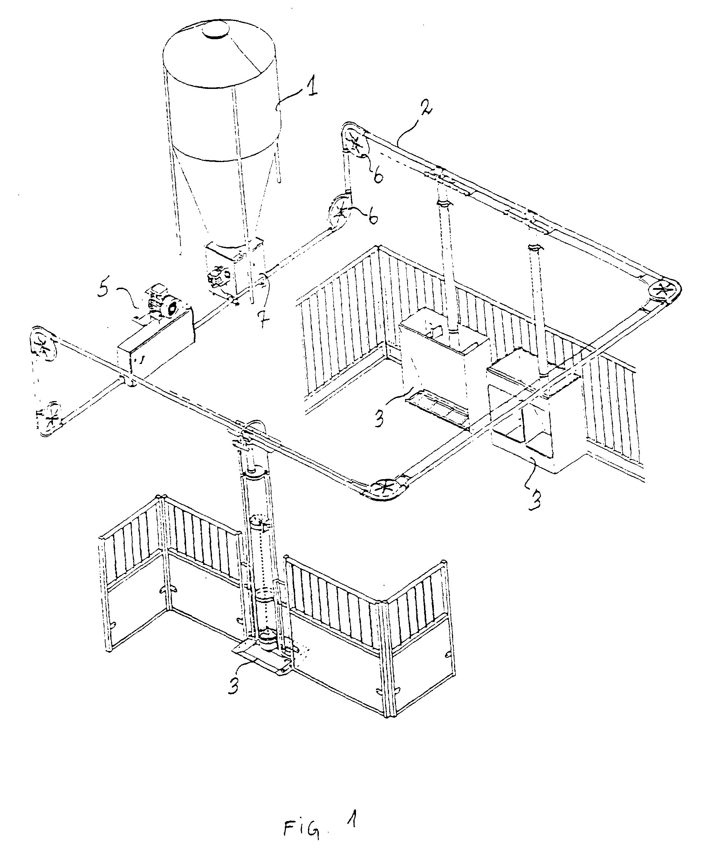

Fig. 1 shows a feeding system for pigs, which comprises a feed silo 1 from which the feed may be moved by a pipe conveyor 2 to the individual feed dispensers 3 which are connected with the conveyor 2. The feed is fed in the pipe conveyor by an endless scraper chain 4, which will be described more fully below. The scraper chain 4 is driven around by means of a drive station 5, where the chain 4 is in engagement with a driving gear wheel. Corner elements 6 containing a deflector gear wheel are provided for directional changes of the conveyor. The feed runs from the silo 1 down into a receiver station 7 connected with the pipe conveyor, through which the scraper chain 7 runs while bringing along feed.

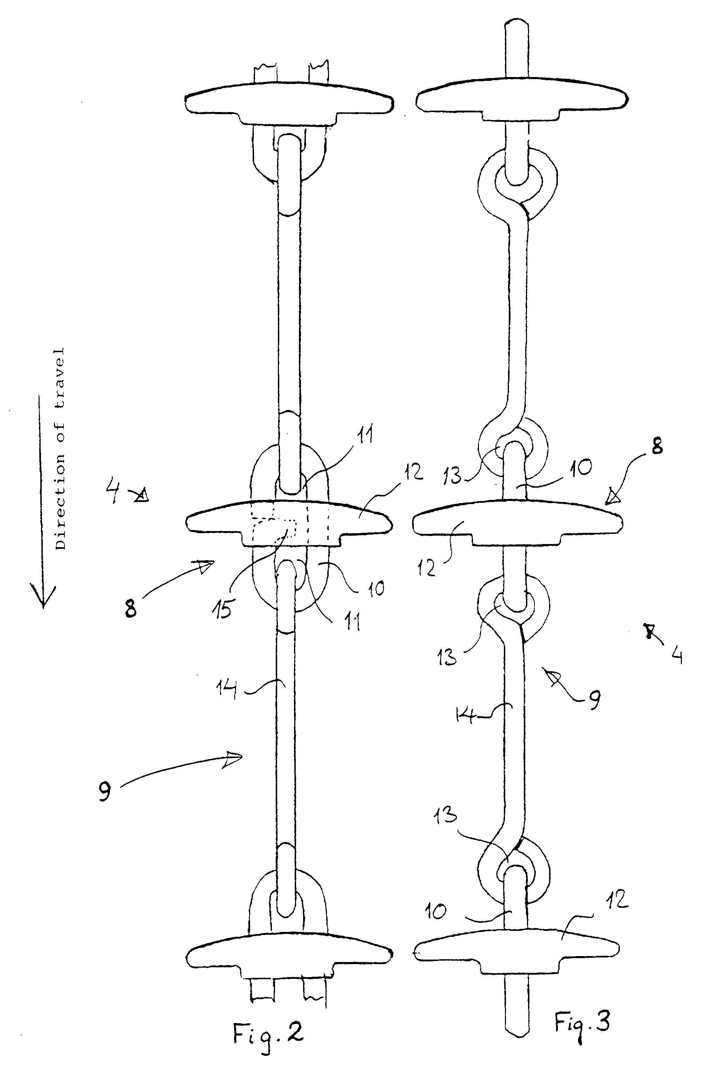

As shown in figs. 2 and 3, the scraper chain 4 according to the invention comprises two types of chain links: a carrier link 8 and a connecting link 9.

The carrier link 8 consists of a wire 10 which is bent into an elongated double eye 11 around which a carrier 12 of plastics is moulded. The link 8 is constructed so that the wire ends meet on one longitudinal side of the link. To fix the carrier so that it cannot unintentionally move on the link, one wire end 15 is bent perpendicularly out from the long side of the link - here inwards toward the longitudinal axis of the link where the thickness of the carriers is greatest. Thus, the embedment in the plastics causes the carrier to be fixed on the link.

The connecting link 9 consists of a wire 14 which is terminated at each end with an eye-shaped bend 13 permanently engaged with an eye 11 on the carrier link 8.

To resist the pull in the chain, the eyes of the connecting links 9 may be welded, and the same applies to the joint in the links 8.

Thus, there is just a single wire 14 between the two end eyes 13, which results in a considerable saving in the weight of the scraper chain, just as no feed can settle on the connecting link 9 since this will slide off, just like in case of a scraper wire.

There will constantly be a certain movement between the eye 11 on the carrier link 8 and the end eye 13 on the connecting link 9 at the joints between the carrier links 8 and the connecting links 9. This continuous relative movement between the links 8, 9 prevents bridge formation of feed, which might otherwise be expected to happen with the present structure of the carrier links 8.

Thus, with this connecting link 9, a scraper chain 4 is obtained, having the same advantages as a scraper wire, but without the drawbacks of the scraper wire with respect to contamination of the feed which is transported in the pipe conveyor.

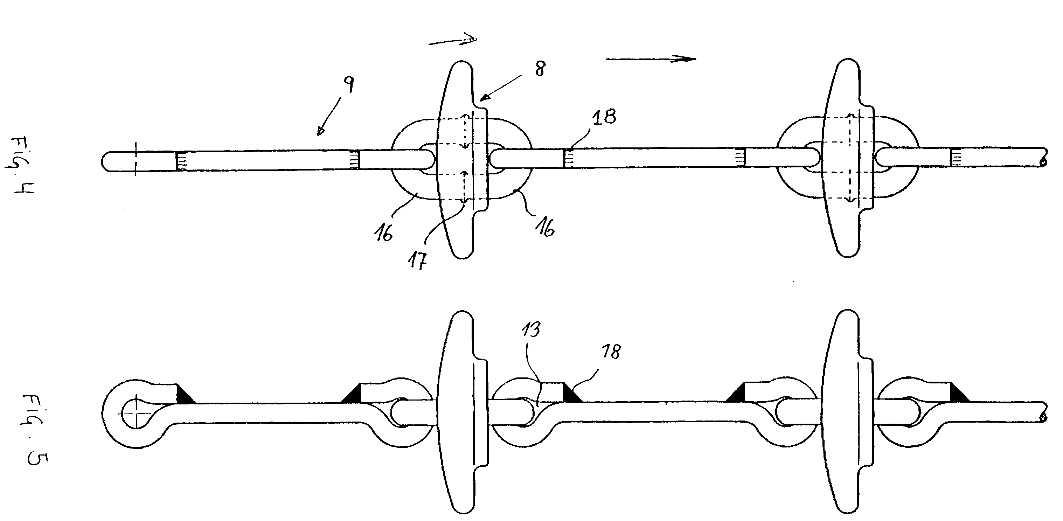

Figs. 4 and 5 of the drawing show another embodiment of the scraper chain according to the invention, where the links 8 with the carriers 12 are made of two halves 16 which are joined by butt welding of the legs. The collar 17 produced by the butt welding causes the carriers to be fixed when these are moulded on the legs. The structure also has effect that the links cannot open. The eyes on the connecting links 9 are welded 18 here, preferably spot welded to resist opening of these by a great tensile loading of the chain.

## Claims

1. A scraper conveyor, in particular a pipe conveyor for feeding systems and of the type which comprises a scraper chain (4) provided with carriers (12) where at least one connecting link (9) is present between two carrier links (8) which are provided with a carrier (12) **characterized in that** the connecting link (9) is essentially rod-shaped and is made of a wire material (14) which is bent at each end into an eye (13) at which the connecting link (9) is hooked together with its adjacent carrier links (8).

2. A scraper conveyor according to claim 1 , **characterized in that** there is precisely one connecting link (9) between each carrier link (8).

3. A scraper conveyor according to claim 1 or 2, **characterized** in that the carrier links (8) exhibit a carrier disc (12) which is moulded on a ring-shaped chain link (10) so that the chain link (10) is divided into two eyes (11), one on each side of the carrier disc (12) for coupling with a connecting link (9) of its own.

4. A scraper conveyor according to claim 3, **characterized** in that the ring-shaped chain link (10) is produced by bending of a wire material (10) whose ends are embedded in the moulded carrier disc (12).

5. A scraper conveyor according to claim 4, **characterized** in that at least one end (15) of the wire (10) is bent transversely to the chain link.

6. A scraper conveyor according to claim 3, **char** **acterized** in that the carrier links (8) consist of two halves which are welded together, with the weld embedded in the carrier disc (12).

7. A feeding system, in particular for pigs, comprising a scraper conveyor (2) , in particular a pipe conveyor for feeding systems of the type which comprises a scraper chain (4) provided with carriers (12) where at least one connecting link (9) is present between two carrier links (8) which are provided with a carrier (12), **characterized in, that** the connecting link (9) is essentially rod-shaped and is made of a wire material (14) which is bent at each end into an eye (13) at which the connecting link (9) is hooked together with its adjacent carrier links (8).

8. A scraper chain, in particular for a pipe conveyor for feeding systems, which scraber chain is provided with carriers (12) where at least one connecting link (9) is present between two carrier links (8) which are provided with a carrier (12) **characterized in that** the connecting link (9) is essentially rod-shaped and is made of a wire material (14) which is bent at each end into an eye (13) at which the connecting link (9) is hooked together with its adjacent carrier links (8).

## Patentansprüche

1. Kratzbandförderer, insbesondere Rohrförderer, der für Fütterungssysteme bestimmt ist und der Art ist, welche ein mit Förderelementen (12) versehenes Kratzband (4) aufweist, bei dem zumindest ein Verbindungsglied (9) zwischen zwei mit einem Förderelement (12) versehenen Fördergliedern (8) vorliegt, **dadurch gekennzeichnet, dass**
das Verbindungsglied (9) im wesentlichen stangenförmig ist und aus einem Drahtmaterial (14) gefertigt ist, welches an jedem Ende zu einer Öse (13) gebogen ist, an welcher das Verbindungsglied (9) mit seinen benachbarten Fördergliedern (8) zusammengehakt ist.

2. Kratzbandförderer nach Anspruch 1, **dadurch gekennzeichnet, dass** genau ein Verbindungsglied (9) zwischen jedem Förderglied (8) *(richtig: zwischen je zwei Fördergliedem)* liegt.

3. Kratzbandförderer nach Anspruch 1 oder 2, **dadurch gekennzeichnet, dass** die Förderglieder (8) eine Förderscheibe (12) aufweisen, welche so auf einem ringförmigen Kettenglied (10) angeformt ist, dass das Kettenglied (10) in zwei Ösen (11) geteilt ist, und zwar eine auf jeder Seite der Förderscheibe (12) zum Koppeln mit einem eigenen Verbindungsglied (9).

4. Kratzbandförderer nach Anspruch 3, **dadurch gekennzeichnet, dass** das ringförmige Kettenglied (10) durch Biegen eines Drahtmaterials (10), dessen Enden in der angeformten Förderscheibe (12) verankert sind, hergestellt wird.

5. Kratzbandförderer nach Anspruch 4, **dadurch gekennzeichnet, dass** zumindest ein Ende (15) des Drahtes (10) quer zum Kettenglied gebogen ist.

6. Kratzbandförderer nach Anspruch 3, **dadurch gekennzeichnet, dass** die Förderglieder (8) aus zwei Hälften bestehen, welche zusammengeschweißt sind, wobei die Schweißstelle in der Förderscheibe (12) eingebettet ist.

7. Fütterungssystem, insbesondere für Schweine, mit einem Kratzbandförderer (2), insbesondere einem Rohrförderer für Fütterungssysteme der Art, welche ein mit Förderelementen (12) versehenes Kratzband (4) aufweist, das zumindest ein Verbindungsglied (9) zwischen zwei mit einem Förderelement (12) versehenen Fördergliedern (8) aufweist, **dadurch gekennzeichnet, dass**
das Verbindungsglied (9) im wesentlichen stangenförmig ist und aus einem Drahtmaterial (14) gefertigt ist, welches an jedem Ende zu einer Öse (13) gebogen ist, an welcher das Verbindungsglied (9) mit seinen benachbarten Fördergliedern (8) zusammengehakt ist.

8. Kratzbandkette, insbesondere für einen Rohrförderer für Fütterungssysteme, wobei die Kratzbandkette mit Förderelementen (12) versehen ist und bei der zumindest ein Verbindungsglied (9) zwischen zwei mit einem Förderelement (12) versehenen Fördergliedern (8) vorliegt, **dadurch gekennzeichnet, dass**
das Verbindungsglied (9) im wesentlichen stangenförmig ist und aus einem Drahtmaterial (14) gefertigt ist, welches an jedem Ende zu einer Öse (13) gebogen ist, an welcher das Verbindungsglied (9) mit seinen benachbarten Fördergliedern (8) zusammengehakt ist.

## Revendications

1. Transporteur à raclettes, en particulier, un transporteur tubulaire pour des systèmes d'alimentation et du type comprenant une chaîne à raclettes (4) munie de supports (12) où au moins un maillon de liaison (9) est présent entre deux maillons de support (8) qui sont munis d'un support (12),
**caractérisé en ce que** le maillon de liaison (9) est essentiellement conformé en tige et est réalisé en une matière de fil métallique (14) qui est courbé à chaque extrémité en un oeillet (13) auquel le maillon de liaison (9) est ancré, ainsi que ses maillons de support adjacents (8).

2. Transporteur à raclettes selon la revendication 1,
**caractérisé en ce qu'**il y a précisément un maillon de liaison (9) entre chaque maillon de support (8).

3. Transporteur à raclettes selon la revendication 1 ou 2,
**caractérisé en ce que** les maillons de support (8) présentent un disque de support (12) qui est moulé sur un maillon de chaîne conformé en anneau (10), de sorte que le maillon de chaîne (10) est divisé en deux oeillets (11), un de chaque côté du disque de support (12) pour le couplage avec un maillon de liaison (9) de celui-ci.

4. Transporteur à raclettes selon la revendication 3,
**caractérisé en ce que** le maillon de chaîne conformé en anneau (10) est produit en courbant une matière de fil métallique (10) dont les extrémités sont intégrées dans le disque de support moulé (12).

5. Transporteur à raclettes selon la revendication 4,
**caractérisé en ce qu'**au moins une extrémité (15) du fil métallique (10) est courbée transversalement au maillon de chaîne.

6. Transporteur à raclettes selon la revendication 3,
**caractérisé en ce que** les maillons de support (8) comprennent deux moitiés qui sont soudées ensemble, avec la soudure intégrée dans le disque de support (12).

7. Système d'alimentation, en particulier pour des porcs, comprenant un transporteur à raclettes (2), en particulier, un transporteur tubulaire pour des systèmes d'alimentation du type comprenant une chaîne à raclettes (4) munie de supports (12) où au moins un maillon de liaison (9) est présent entre deux maillons de support (8) qui sont munis d'un support (12),
**caractérisé en ce que** le maillon de liaison (9) est essentiellement conformé en tige et est réalisé en une matière de fil métallique (14) qui est courbé à chaque extrémité en un oeillet (13) auquel le maillon de liaison (9) est ancré, ainsi que ses maillons de support adjacents (8).

8. Chaîne à raclettes, en particulier pour un transporteur tubulaire pour des systèmes d'alimentation, laquelle chaîne à raclettes est munie de supports (12) où au moins un maillon de liaison (9) est présent entre deux maillons de support (8) qui sont munis d'un support (12),
**caractérisée en ce que** le maillon de liaison (9) est essentiellement conformé en-tige et est réalisé en une matière de fil métallique (14) qui est courbé à chaque extrémité en un oeillet (13) auquel le maillon de liaison (9) est ancré, ainsi que ses maillons de support adjacents (8).
